# EUROPÄISCHE PATENTANMELDUNG

(11) **EP 1 002 564 A1**
(43) Veröffentlichungstag der Anmeldung: **24.05.2000**
(21) Anmeldenummer: 99120787.9
(22) Anmeldetag: 20.10.1999
(51) Int. Cl.: B01D 29/11, B01D 29/54, B01D 29/86

(54) **Filtriereinrichtung**

(30) Priorität: 05.11.1998 DE 19851046
(71) Anmelder: WMF WÜRTTEMBERGISCHE METALLWARENFABRIK AG, 73309 Geislingen/Steige (DE)
(72) Erfinder: Walter, Konrad, 89174 Altheim (DE); Fallabeck, Ralf, 89547 Gerstetten (DE)
(74) Vertreter: Grünecker, Kinkeldey, Stockmair & Schwanhäusser Anwaltssozietät

(57) **Zusammenfassung**

Es wird eine Filtriereinrichtung beschrieben, die wenigstens ein Filterelement und eine am Filterelement vorbei bewegbare Einrichtung zum Erzeugen einer Querströmung am Filterelement enthält, beschrieben. Um die Filtriereinrichtung bei konstruktiv einfachster Ausgestaltung noch wirksamer im Hinblick auf eine Querströmungserzeugung auszugestalten, wird vorgeschlagen, die Einrichtung zum Erzeugen einer Querströmung mit einer dem Filterelement zugewandten, in Bewegungsrichtung wellen- oder zick-zack-förmig ausgebildeten Wirkfläche zu versehen.

## Beschreibung

Die Erfindung bezieht sich auf eine Filtriereinrichtung der im Oberbegriff von Anspruch 1 erläuterten Art.

Bei Filtiereinrichtungen zum Filtrieren von mit Feststoffen beladenen Flüssigkeiten besteht immer das Problem, dass sich die ausgefilterten Feststoffe auf dem Filterelement festsetzen und den Durchsatz durch das Filterelement (den sogenannten Flux) drastisch vermindern. Um dieses Zusetzen der Filterelemente zu verhindern oder zumindest zu verringern, sind bereits eine Reihe von Filtriereinrichtungen vorgeschlagen worden, die Einrichtungen enthalten, mit denen eine Querströmung bezüglich der Oberfläche der Filterelemente, d.h. eine Strömung quer zur normalen Filterströmung des zu filternden Mediums, erzeugt wird. So zeigt die DE-B-43 40 218 eine Filtriereinrichtung mit einer Mehrzahl von Filterkerzen, die in ringförmigen Gruppen um eine gemeinsame Mittellinie angeordnet sind. Die Einrichtung zum Erzeugen einer Querströmung enthält Rührelemente in Form von Rührstäben, die sich jeweils durch den Abstand zwischen den einzelnen Ringgruppen der Filterelemente bewegen. Die durch die Stäbe erzeugte Rührbewegung im Medium reicht jedoch für viele Verwendungszwecke nicht aus, um das Zusetzen der Filterelemente, insbesondere im Umfangsabstand zwischen zwei benachbarten Filterelementen einer Ringgruppe, zu vermeiden.

Die Filtriereinrichtung nach der DE-B-195 28 775 beruht auf einem ähnlichen Prinzip. Nur sind dort die Rührelemente als Rührblechstreifen ausgebildet, die sich über ihre gesamte Länge radial zu ihrer Drehachse erstrecken, jedoch schraubenförmig geneigt um diese Drehachse herum angeordnet sind. Auch mit diesen Rührelementen ist es nicht immer möglich, die Filterelemente insbesondere an derjenigen Seite sauber zu halten, die dem benachbarten Filterelemente der gleichen Ringgruppe zugewandt ist.

Etwas besser ist die allseitige Reinigungswirkung der Filterelemente in der Konstruktion nach der EP-B-577 854, bei der die wiederum in koaxialen Ringgruppen angeordneten Filterelemente um ihre gemeinsame Achse rotieren. Bei dieser Ausgestaltung ist jedoch die Abdichtung des Auslaufs und/oder des Einlaufs problematisch.

Der Erfindung liegt somit die Aufgabe zugrunde, eine Filtriereinrichtung bereitzustellen, die bei konstruktiv einfachem Aufbau in der Lage ist, eine zum Freihalten der Filterelemente wirksame Querströmung zu erzeugen.

Die Aufgabe wird durch die im Anspruch 1 angegebenen Merkmale gelöst.

Die erfindungsgemäß vorgesehenen wellen- oder zick-zack-förmigen Wirkflächen sind wesentlich besser als die herkömmlichen Rührelemente in der Lage, auch diejenigen Filterflächen mit einer freihaltenden Querströmung zu beaufschlagen, die nicht direkt den Wirkflächen zugewandt sind. Die wellen- oder zick-zack-förmigen Wirkflächen der vorliegenden Erfindung wirken als eine Art Strömungstreiber, die die Filterflüssigkeit auch quer zur Bewegungsrichtung der Wirkfläche am Filterelement vorbeidrückt.

Noch eindeutiger wird die Funktion der erfindungsgemäßen Wirkfläche als Strömungstreiber, wenn gemäß Anspruch 2 zwei derartige Wirkflächen beidseitig vom Filterelement angeordnet und parallel zueinander ausgebildet und bewegt werden. Durch diese Ausgestaltung wird das sich zwischen den beiden Wirkflächen befindende Flüssigkeitsband einmal von der einen Seite und unmittelbar darauffolgend von der anderen Seite bezüglich des Filterelements hin- und hergedrückt.

Besonders einfach lässt sich die erfindungsgemäß beabsichtigte Wirkung erreichen, wenn man die Wirkflächen gemäß Anspruch 3 an einem Rotorelement vorsieht.

Durch die Ausgestaltung nach Anspruch 4 wird eine besonders gleichmäßige Querströmung erreicht.

Die Ausgestaltung nach Anspruch 5 erlaubt eine besonders einfache Konstruktion.

Je nach zu filtrierendem Medium können die Wirkflächen gemäß den Ansprüchen 6 oder 7 entweder geschlossen und glatt oder durchbrochen, beispielsweise aus gelochtem Blech sein.

Die erfindungsgemäße Ausgestaltung eignet sich besonders für die in Anspruch 8 beschriebenen zylindrischen Filterkerzen.

Anspruch 9 beschreibt eine besonders bevorzugte Ausgestaltung einer erfindungsgemäßen Filtriereinrichtung.

Durch die in Anspruch 10 beschriebene Abstimmung der Form, der Abmessung und der Umdrehungszahl benachbarter Rotorelemente wird deren Wirkung zur Erzeugung einer Querströmung optimiert.

Ein Ausführungsbeispiel der Erfindung wird nachfolgend anhand der Zeichnungen näher erläutert. Es zeigen:
- Fig. 1: eine schematische Darstellung eines Längsschnitts durch eine erfindungsgemäße Filtriereinrichtung, und
- Fig. 2: den Schnitt II-II aus Fig. 1, ebenfalls in schematischer Darstellung.

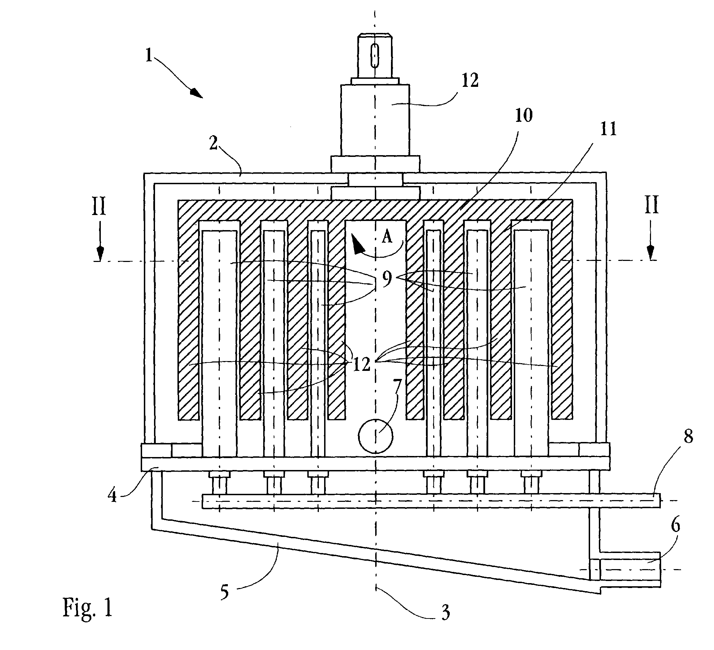

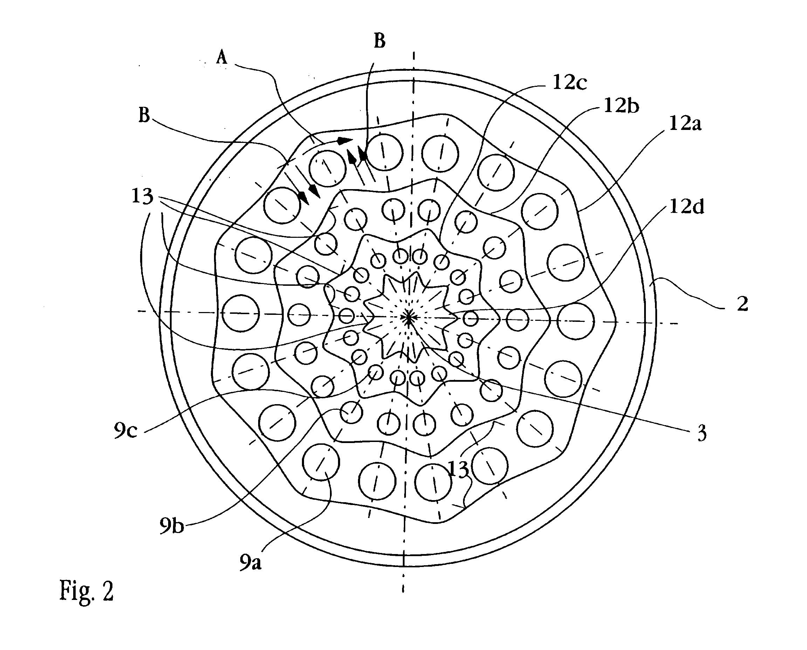

Aus den Fig. 1 und 2 ist eine Filtriereinrichtung 1 ersichtlich, die ein trommelförmiges Gehäuse 2 aufweist, das mit senkrechter Mittellinie 3 angeordnet ist. Das Gehäuse 2 ist an seiner unteren Stirnseite mit einer Grundplatte 4 versehen. Unterhalb der Grundplatte 4 ist eine Sammelwanne 5 für das eingedickte Medium angeordnet, die einen Auslaufstutzen 6 aufweist.

In das Gehäuse 2 mündet weiterhin ein Einlassstutzen 7 für das zu filtrierende Medium, beispielsweise für eine mit Feststoffen beladene Flüssigkeit.

In der Grundplatte 4 sind eine Vielzahl von Filterelementen 9 befestigt, die im Inneren des Gehäuses 2 untergebracht sind. Jedes Filterelement 9 ist mit einer Ablaufleitung 8 verbunden, die entweder, wie dargestellt, das Filtrat aus allen Filterelementen 9 aufnimmt, oder, zur Funktionskontrolle, jedes Filterelement getrennt mit einem außerhalb des Gehäuses 2 liegenden Ablauf verbindet.

Als Filterelemente 9 werden bevorzugt die üblichen Filterkerzen verwendet, die einen langgestreckt zylindrischen Filtermantel aufweisen, der von außen nach innen durchströmt wird, wobei ein Auslassstutzen an einer Stirnseite der zylindrischen Filterkerze angeordnet ist und mit deren Innenraum in Verbindung steht. Wie Fig. 1 zeigt, sind die Filterelemente 9 aufrechtstehend, d.h. mit senkrechter Mittellinie, auf der Grundplatte 4 in der üblichen Weise befestigt.

Im Gehäuse 2 ist weiterhin eine Einrichtung 10 zur Erzeugung einer Querströmung angeordnet. Die Einrichtung 10 enthält einen im oberen Bereich des Gehäuses 2, d.h. der Grundplatte 4 entgegengesetzt, angeordneten Träger 11, beispielsweise ein Drehkreuz oder dgl., der um die als Drehachse ausgebildeten Mittellinie 3 des Gehäuses 2 über einen Wellenzapfen 12 und einen nicht gezeichneten Motor in Richtung des Pfeiles A rotierend angetrieben wird. Vom Träger 11 stehen nach unten, d.h. in Richtung auf die Grundplatte 4, eine Vielzahl von Rotorelementen 12 vor, deren Erstreckungsrichtung parallel zur Mittellinie der Filterelemente 9 und zur Drehachse 3 verläuft, die gemeinsam, d.h. mit gleicher Umdrehungszahl, angetrieben werden und die in nächster Nähe zu den Filterelementen 9 angeordnet sind.

Die gegenseitige Anordnung der Rotorelementen 12 und der Filterelementen 9 ist deutlicher in Fig. 2 gezeigt. Die Filterelemente 9 sind in drei Gruppen 9a, 9b und 9c in zueinander beabstandeten, konzentrischen Ringen um die Drehachse 3 angeordnet. Jede der Gruppen 9a, b, c enthält Filterelemente gleicher Größe und Gestalt, wobei jedoch der Durchmesser der Filterelemente vom äußeren Ring 9a über den mittleren Ring 9b zum inneren Ring 9c abnimmt.

Die Rotorelemente 12 sind als in Umfangsrichtung geschlossene und wenigstens an der unteren Stirnseite offene Zylinder aus einem undurchlässigen, glatten Blech oder, in Abhängigkeit von der Konsistenz des zu filternden Mediums, aus einem durchbrochenen Material, z.B. einem gelochten Blech, ausgebildet. Jedes der Rotorelemente 12 weist eine in Richtung auf die Filterelemente 9 weisende Wirkfläche 13 auf, die mit abwechselnd zueinander angeordneten und sich unmittelbar aneinander anschließenden "Bergen" und "Tälern" versehen, d.h. im wesentlichen wellen- oder zick-zack-förmig ausgebildet ist. Diese Form der Wirkflächen wird bevorzugt dadurch erreicht, dass man zur Herstellung der zylindrischen Rotorelemente 12 ein Wellblech oder ein geeignetes, anderes Blech verwendet, wobei die gewünschte Wellen- oder Zick-Zack-Form an beiden Zylinderseiten der Rotorelemente 12 erscheint. Die Wellen- und Zick-Zack-Form erscheint in Drehrichtung A und die Scheitel erstrecken sich im wesentlichen parallel zur Drehachse 3.

Jede der Gruppen 9a, 9b und 9c der Filterelemente 9 befindet sich zwischen jeweils zwei Wirkflächen 13 benachbarter Rotorelemente, wobei die äußere Ringgruppe 9a durch die Rotorelemente 12a und 12b, die mittlere Ringgruppe 9b durch die Rotorelemente 12b und 12c sowie die inneren Ringgruppe 9c durch die Rotorelemente 12c und 12d eingeschlossen ist. Die jeweils auf die gleiche Gruppe 9a, 9b, 9c weisenden Wirkflächen 13 benachbarter Rotorelemente 12a und 12b, 12b und 12c, 12c und 12d, sind so gewellt oder zick-zack-förmig gebogen, dass die Scheitel jeweils auf einem gemeinsamen Radius bezüglich der Drehachse 3 liegen; die Wirkflächen 13 somit in Umfangsrichtung parallel zueinander verlaufen. Auf dieses Weise wird die sich zwischen den kooperierenden Wirkflächen 13 befindende Flüssigkeitssäule einmal radial nach außen und unmittelbar anschließend radial nach innen gedrückt, wodurch die radiale Komponente B der Querströmung entscheidend verstärkt wird. Durch diese radiale Komponente B wird der Umfangs-Zwischenraum zwischen benachbarten Filterelementen einer Gruppe freigehalten. Ein Teil der radialen Komponente B und die Umfangskomponente der Querströmung in Drehrichtung A wird durch die bezüglich der Drehrichtung A schrägstehenden Wirkflächen 13 erzeugt. Die Rotorelemente 12 wirken demnach als Strömungstreiber, die die Filterelemente 9 allseitig von Ablagerungen freihalten und somit den Durchsatz durch die Filtriereinheit 1 auf hohem Niveau aufrechthalten.

In Abwandlung des beschriebenen und gezeichneten Ausführungsbeispiels können die Wirkflächen auch für andere Filtriereinrichtungen bzw. anders geformte Filterelemente eingesetzt werden, wobei sie nicht unbedingt gedreht werden müssen. Obwohl die Anordnung von jeweils wenigstens zwei Wirkflächen an gegenüberliegenden Seiten eines Filterelements bevorzugt ist, können Querströmungen, bei bestimmten Medien auch nur mit einer einzigen, erfindungsgemäß ausgebildeten Wirkfläche erzielt werden. Sind die Wirkflächen an Rotorelementen ausgebildet, so müssen sie nicht unbedingt als in Umfangsrichtung geschlossene Zylinder ausgebildet sein; vielmehr kann es unter Umständen ausreichen, die Wirkfläche nur in Form von Kreisbogenabschnitten auszubilden. Schließlich müssen die Wirkflächen, insbesondere bei den radial innersten oder radial äußersten Rotorelementen nicht beidseitig vorgesehen sein. Schließlich müssen die Filterelemente nicht, wie im dargestellten Ausführungsbeispiel, feststehen, sondern können zusätzlich zu den Rotorelementen bewegt werden.

## Patentansprüche

1. Filtriereinrichtung (1) mit wenigstens einem Filterelement (9) und einer am Filterelement (9) vorbei bewegbaren Einrichtung (10) zum Erzeugen einer Querströmung am Filterelement (9), **dadurch gekennzeichnet,** dass die Einrichtung (10) zum Erzeugen einer Querströmung eine dem Filterelement (9) zugewandte, in Bewegungsrichtung wellen- oder zick-zack-förmig ausgebildete Wirkfläche (13) enthält.

2. Filtriereinrichtung nach Anspruch 1, **dadurch gekennzeichnet,** dass die Einrichtung (10) zum Erzeugen einer Querströmung zwei das Filterelement (9) einschließende, gemeinsam bewegbare und parallel zueinander wellen- oder zick-zack-förmig ausgebildete Wirkflächen (13) aufweist.

3. Filtriereinrichtung nach Anspruch 1 oder 2, **dadurch gekennzeichnet,** dass die Einrichtung (10) zum Erzeugen einer Querströmung ein um eine Drehachse (3) drehbares, mit wenigstens einer Wirkfläche (13) versehenes Rotorelement (12) aufweist.

4. Filtriereinrichtung nach Anspruch 3, **dadurch gekennzeichnet,** dass das Rotorelement (12) mit einer in Drehrichtung geschlossenen Wirkfläche (13) ausgebildet ist.

5. Filtriereinrichtung nach Anspruch 3 oder 4, **dadurch gekennzeichnet,** dass das Rotorelement (12) beidseitig mit jeweils einer Wirkfläche (13) versehen ist und sich zwischen zwei Filterelementen (9) hindurchbewegt.

6. Filtriereinrichtung nach Anspruch 5, **dadurch gekennzeichnet,** dass das Rotorelement (12) aus einem wellen- oder zick-zack-förmig gebogenen, undurchlässigen Flächenmaterial, insbesondere einem Blech, hergestellt ist.

7. Filtriereinrichtung nach Anspruch 5, **dadurch gekennzeichnet,** dass das Rotorelement (12) aus einem wellen- oder zick-zack-förmig gebogenen, durchlässigen Flächenmaterial, insbesondere einem gelochten Blech, hergestellt ist.

8. Filtriereinrichtung nach einem der Ansprüche 1 bis 7, **dadurch gekennzeichnet,** dass das Filterelement (9) als zylindrische Filterkerze ausgebildet ist.

9. Filtriereinrichtung nach einem der Ansprüche 1 bis 8, **gekennzeichnet durch** eine Mehrzahl von Filterelementen (9), die in wenigstens zwei Ringgruppen (9a, 9b, 9c) mit einem radialen Zwischenraum zueinander um eine Drehachse (3) der Einrichtung (10) zum Erzeugen einer Querströmung angeordnet sind, wobei die Einrichtung (10) ein erstes Rotorelement (12) aufweist, das beidseitig mit jeweils einer Wirkfläche (13) versehen und im Zwischenraum zwischen den Ringgruppen (9a, 9b, 9c) angeordnet ist, und dass außerhalb der radial äußersten und innerhalb der radial innersten Ringgruppe (9a, 9c) ein weiteres Rotorelement (12a, 12d) mit einer der jeweils anliegenden Ringgruppe (9a, 9c) zugewandten Wirkfläche (13) angeordnet ist.

10. Filtriereinrichtung nach Anspruch 9, **dadurch gekennzeichnet,** dass die Wirkflächen (13) der Rotorelemente (12) so ausgebildet und angeordnet sind, dass jeder Scheitel einer Wellen- oder Zick-Zack-Form an einem Rotorelement (12) mit einem Scheitel einer Wellen- oder Zick-Zack-Form am benachbarten Rotorelement (12) auf einem gemeinsamen Radius zur Drehachse (3) liegt, und dass die benachbarten Rotorelemente (12) mit gleicher Umdrehungszahl angetrieben werden.
